# EUROPEAN PATENT APPLICATION

(11) **EP 4 653 091 A1**
(43) Date of publication of application: **26.11.2025**
(21) Application number: 24744904.4
(22) Date of filing: 18.01.2024
(51) Int. Cl.: B01J 37/02, B01J 37/00, B01J 37/16, B01J 23/63, C01B 3/04

(54) **CATALYST FOR AMMONIA DECOMPOSITION REACTION, METHOD FOR PREPARING SAME, AND METHOD FOR PRODUCING HYDROGEN BY USING SAME**

(30) Priority: 20.01.2023 KR 20230008996
(71) Applicant: Korea Research Institute of Chemical Technology, Daejeon 34114 (KR)
(72) Inventor: CHAE, Ho Jeong, Daejeon 34114 (KR); KIM, Young Min, Daejeon 34114 (KR); KIM, Geo Jong, Daejeon 34114 (KR)
(74) Representative: Michalski Hüttermann & Partner Patentanwälte mbB
(86) International application number: PCT/KR2024/000906
(87) International publication number: WO 2024/155125

(57) **Abstract**

The present invention relates to a catalyst for an ammonia decomposition reaction, a method for preparing same, and a method for producing hydrogen by using same. More specifically, the present invention relates to a method for preparing a catalyst for an ammonia decomposition reaction, which economically and efficiently supports highly active ruthenium on a lanthanum-cerium composite oxide support, thereby preparing a catalyst that exhibits a higher ammonia conversion rate than conventional catalysts for an ammonia decomposition reaction, to a catalyst for an ammonia decomposition reaction prepared by the same method, and a method for producing hydrogen by using the same.

## Description

### Technical Field

The present disclosure relates to a catalyst for an ammonia decomposition reaction, a method of preparing the same, and a method of producing hydrogen using the same. More particularly, the present disclosure relates to a catalyst for an ammonia decomposition reaction, which is capable of improving an ammonia conversion rate in terms of the ammonia decomposition reaction, to a method of preparing the same, and to a method of producing hydrogen using the same.

### Background Art

Recently, with intensifying climate change, hydrogen energy has gained attention as an environmentally friendly alternative, used around the world, to fossil fuels. For the practical use of hydrogen, it is important to develop technologies to store and transport hydrogen safely and efficiently. Despite many ways to store hydrogen, there are expectations in methods using hydrogen storage materials, serving as hydrogen storage media installed in fuel cell vehicles, that can reversibly store and release hydrogen.

One of the methods of storing and transporting hydrogen is to use ammonia as a storage and supply source of hydrogen. The decomposition process of ammonia into hydrogen and nitrogen is endothermic and thus requires energy to obtain products. Existing catalytic decomposition reactions require considerable amounts of heat to obtain effective amounts of hydrogen gas and, accordingly, are costly to produce hydrogen in such a manner.

2NH₃ → 3H₂ + N₂ (endothermic reaction) ... (1)

Catalysts for ammonia decomposition reactions are those decomposing ammonia into nitrogen and hydrogen. There have been problems with poor conversion rates in attempts to obtain high-purity hydrogen using existing ammonia decomposition catalysts that have been proposed so far.

Accordingly, the present disclosure aims to propose a novel ammonia decomposition catalyst having a high ammonia conversion rate to nitrogen and hydrogen.

In the related art, Japanese Patent No. 6381131 has proposed a ruthenium-supported catalyst in which ruthenium is supported uniformly on a carrier containing a basic magnesium carbonate, wherein the ruthenium-supported catalyst is prepared by precipitating a magnesium compound and a ruthenium compound by alkali metal carbonate in an aqueous solution and subjecting the resulting product to drying, calcination, and reduction, thus having a high specific surface area and a pore diameter distribution peak around 30 Å.

In addition, Korean Patent No. 2303094 has proposed a catalyst for ammonia decomposition, the catalyst having a structure in which ruthenium is substituted into a cerium lattice and bonded by subjecting a cerium precursor to calcination to prepare a cerium carrier and then supporting a ruthenium precursor, followed by drying and calcination, so that 1 part by weight to 10 parts by weight of ruthenium is included with respect to 100 parts by weight of the cerium carrier.

However, the above patents, which aim to improve the catalytic activity of ruthenium by the method of adding other active materials to the catalyst or modifying the carrier, do not seek to improve the catalytic activity by changing the method of preparing the ruthenium catalyst as in the present disclosure.

In the meantime, when it comes to the industrial use of catalysts, catalyst supports are shaped and used to address the issue of pressure drop and improve the ease of use. Considering mass transfer resistance and the issue where active metals cluster due to the limited specific surface area of catalyst supports, supporting active metals on such supports requires methods of preparing catalysts for ammonia decomposition reactions, which exhibit further economic and high ammonia conversion rates.

In the present disclosure, a method of preparing a catalyst for an ammonia decomposition reaction has been modified, thus providing a method of preparing a catalyst having higher ammonia decomposition activity than those prepared by existing preparation methods, and a catalyst prepared thereby.

### [Documents of Related Art]

### [Patent Documents]

(Patent Document 1) Japanese Patent No. 6381131 (Publication Date: September 5, 2016)
(Patent Document 2) Korean Patent No. 2303094 (Publication Date: January 20, 2016)

### Disclosure

### Technical Problem

The present disclosure primarily aims to provide a method of preparing a catalyst for an ammonia decomposition reaction, the method being capable of easily preparing the catalyst for the ammonia decomposition reaction, wherein the catalyst exhibits a high ammonia conversion rate and excellent catalytic activity, and a catalyst for an ammonia decomposition reaction, prepared by the above preparation method.

In addition, the present disclosure aims to provide a method of producing hydrogen, the method being capable of efficiently producing hydrogen from ammonia using the above catalyst for the ammonia decomposition reaction.

### Technical Solution

To achieve the objectives as described above, one embodiment of the present disclosure provides a method of preparing a catalyst for an ammonia decomposition reaction, which is characterized by including a step of supporting an active metal on a lanthanum-cerium composite oxide support by: adding the lanthanum-cerium composite oxide support to an active metal precursor solution in which a ruthenium precursor is dissolved as an active metal precursor, and then reacting the active metal of the precursor solution with lanthanum and/or cerium of the lanthanum-cerium composite oxide support by an element substitution reaction.

In one embodiment of the present disclosure, in the step of supporting the active metal, the active metal precursor solution is characterized by including a cesium precursor in addition to the ruthenium precursor.

In addition, after the step of supporting the active metal by the element substitution, a step of subjecting the resulting active metal-supported product to filtration and then cleaning so that a physically absorbed active metal solution and an inert material are removed from the active metal precursor in the resulting supported product obtained by the filtration may be characterized by being further added.

After the filtration and the cleaning, a step of subjecting the active metal-supported product to reduction in a reducing atmosphere may be added. In addition, before the reduction, a step of drying the active metal-supported product obtained in the step of supporting the active metal may be characterized by being added.

In another embodiment of the present disclosure, in the step of supporting ruthenium serving as the active metal, cesium may be characterized by being pre-supported on the lanthanum-cerium composite oxide support added to the precursor solution.

In another embodiment of the present disclosure, after the step of supporting ruthenium serving the active metal, a step of further supporting cesium may be added, and the supporting of cesium may be performed by an impregnation method. In addition, before the supporting of cesium, one or more steps of drying, calcination, and reduction may be characterized by being performed on the lanthanum-cerium composite oxide support on which ruthenium is supported.

In one preferred embodiment of the present disclosure, the lanthanum-cerium composite oxide support may be characterized by including the following steps: (i) obtaining a mixture of lanthanum and cerium by adding a lanthanum precursor and a cerium precursor to a solvent; (ii) producing a precipitate by adding a basic substance to the obtained mixture of lanthanum and cerium; (iii) subjecting the resulting precipitate to filtration, cleaning, and then drying; (iv) obtaining a lanthanum and cerium composite oxide solid solution by subjecting the dried precipitate to calcination; and (v) obtaining the lanthanum-cerium composite oxide support by shaping the obtained lanthanum and cerium composite oxide solid solution and then subjecting the shaped lanthanum and cerium composite oxide solid solution to calcination.

In one preferred embodiment of the present disclosure, in the lanthanum-cerium composite oxide support, a mole ratio of lanthanum to cerium may be characterized by being in the range of 0.1:0.9 to 0.5:0.5.

In one preferred embodiment of the present disclosure, the element substitution may be characterized by being performed for 30 minutes to 24 hours.

In one preferred embodiment of the present disclosure, the reduction treatment may be characterized by being performed through heating in a temperature range of 300°C to 800°C in the presence of a reducing gas.

In one preferred embodiment of the present disclosure, the catalyst for the ammonia decomposition reaction may include 0.1 wt% to 10 wt% of ruthenium and 0.01 wt% to 10 wt% of cesium, with respect to the total weight of the catalyst.

The present disclosure also provides a catalyst for an ammonia decomposition reaction, the catalyst being prepared by the above method of preparing the catalyst of the present disclosure, whereby ruthenium serving as an active metal is supported on a lanthanum-cerium composite oxide support by element substitution.

Another embodiment of the present disclosure provides a catalyst for an ammonia decomposition reaction, which is characterized by being prepared by the above method of preparing the catalyst for the ammonia decomposition reaction and including ruthenium supported on a lanthanum-cerium composite oxide support, and a method of producing hydrogen from ammonia by an ammonia decomposition reaction in the presence of the catalyst for the ammonia decomposition reaction.

In another preferred embodiment of the present disclosure, the ammonia decomposition reaction may be characterized by being performed in a temperature range of 300°C to 550°C.

### Advantageous Effects

A method of preparing a catalyst for an ammonia decomposition reaction, according to the present disclosure, can support ruthenium (Ru) on a lanthanum-cerium composite oxide support by element substitution, thus preparing a catalyst system having higher ammonia decomposition activity than catalysts prepared through other metal-supporting methods, such as wet impregnation and dip coating, or those in the case where ruthenium is supported on each oxide by element substitution. In particular, this method can further effectively be used in terms of supporting ruthenium on shaped supports.

In addition, the method of preparing the catalyst for the ammonia decomposition reaction, according to the present disclosure, is advantageous in that the use of a separate reducing agent is not involved, thus reducing the generation of wastewater and fundamentally preventing the catalytic activity from being reduced by unnecessary compounds.

Furthermore, a catalyst for an ammonia decomposition reaction, prepared by the method described above, can improve an ammonia conversion rate on the basis of high catalytic activity in terms of ammonia decomposition reactions, thus efficiently producing hydrogen from ammonia.

### Description of Drawings

FIG. 1 is a flow diagram illustrating a method of preparing a catalyst for an ammonia decomposition reaction, according to one embodiment of the present disclosure.
FIG. 2a shows scanning transmission electron microscopy-energy dispersive spectroscopy (STEM-EDS) mapping images showing the distribution of Ru, Ce, La, and Cs atoms in a dried sample prepared but obtained before a reduction process, according to Example 1 of the present disclosure.
FIG. 2b shows STEM-EDS mapping images showing the distribution of Ru, Ce, La, and Cs atoms in a catalyst prepared according to Example 1 of the present disclosure.
FIG. 3 is a graph showing measurement results of ammonia conversion rates of catalysts prepared in Example 1 and Comparative Examples 1 to 5 of the present disclosure, depending on catalyst preparation methods.
FIG. 4 is a graph showing measurement results of ammonia conversion rates of catalysts prepared in Example 12 and Comparative Examples 8 and 9 of the present disclosure, depending on catalyst preparation methods.
FIG. 5 is a graph showing measurement results of ammonia conversion rates of catalysts prepared in Example 1 and Comparative Examples 6 and 7 of the present disclosure, depending on catalyst supports.
FIG. 6 is a graph showing measurement results of ammonia conversion rates of catalysts prepared in Examples 1 to 4 of the present disclosure.
FIG. 7 is a graph showing measurement results of ammonia conversion rates of catalysts prepared in Examples 5 to 7 of the present disclosure, depending on element substitution reaction temperatures.
FIG. 8 is a graph showing measurement results of ammonia conversion rates of catalysts prepared in Examples 1 and 8 of the present disclosure.
FIG. 9 is a graph showing measurement results of ammonia conversion rates of catalysts prepared in Examples 2, 7, and 9 to 11 of the present disclosure, depending on element substitution reaction times.
FIG. 10 is a graph showing measurement results of ammonia conversion rates of catalysts prepared in Examples 13 and 17 to 18 of the present disclosure, depending on cesium addition methods.
FIG. 11 is a graph showing measurement results of ammonia conversion rates of catalysts prepared in Examples 12 to 16 of the present disclosure, depending on cesium addition methods.

### Mode for Invention

Unless defined otherwise, all terms including technical and scientific terms used herein have the same meaning as commonly understood by those skilled in the art to which the present disclosure pertains. In general, the nomenclature used herein is well-known and commonly used in the art.

As stated herein, the term "element substitution reaction" refers to a reaction by which ruthenium is supported on a lanthanum-cerium composite oxide support, wherein ruthenium is substituted for cerium and/or lanthanum of the lanthanum-cerium composite oxide support by element substitution due to a difference in reduction potential levels between lanthanum and/or cerium and elements on the composite oxide and is supported on the support.

As stated herein, the terms such as "comprising", "containing", "including", or "having" are intended to specify the presence of the features, integers, steps, operations, components, elements, or combinations thereof stated herein but do not exclude the possibility that other unmentioned features, integers, steps, operations, components, elements, or combinations thereof may be present or added.

The present disclosure relates to a method of preparing a catalyst for an ammonia decomposition reaction utilizing ruthenium as the main active metal and a lanthanum-cerium composite oxide as a support.

Ruthenium is a material that is well-known as an active metal in ammonia decomposition reactions, but the activities thereof in ammonia decomposition reactions vary depending on the types of supports and supporting methods. In particular, to efficiently and economically support ruthenium on shaped carriers, the development of an optimal supporting method is necessary.

The present disclosure is based on the discovery that when supporting ruthenium on a lanthanum-cerium composite support by an element substitution method, which is capable of economically and efficiently supporting such ruthenium, the ammonia decomposition activity can be increased compared to that of catalysts prepared through other metal-supporting methods, such as wet impregnation and dip coating, or those in the case where each oxide support other than a composite support is involved.

More specifically, the method of preparing the catalyst, according to the present disclosure, relates to an ammonia decomposition catalyst in which ruthenium serving as an active metal is supported on a lanthanum-cerium composite oxide support by element substitution, thus allowing the supporting process of the active metal to be simplified while obtaining high activity, without involving the use of a separate reducing agent, and to a method of preparing the same. In particular, this method was found to be effective as a method of preparing a shaped catalyst, which led to the completion of the present disclosure.

In the method of preparing the catalyst according to the present disclosure, after a step of supporting an active metal such as ruthenium, a step of subjecting the resulting active metal-supported product to reduction in a reducing atmosphere may be added. In addition, before the reduction step, a step of drying the active metal-supported product obtained in the active metal-supporting step may be added.

In one embodiment of the present disclosure, cesium may be added and used as a co-catalyst, in addition to ruthenium serving as the active metal.

The core step of the present disclosure is to support ruthenium on the lanthanum-cerium composite oxide-containing support by element substitution. When this step is involved, the catalyst prepared thereby exhibits a higher ammonia decomposition efficiency than catalysts in the case where ruthenium is supported by other methods.

The following embodiments as preferred examples of the method of preparing the catalyst for the ammonia decomposition reaction, according to the present disclosure, will be described in detail with reference to the accompanying drawings.

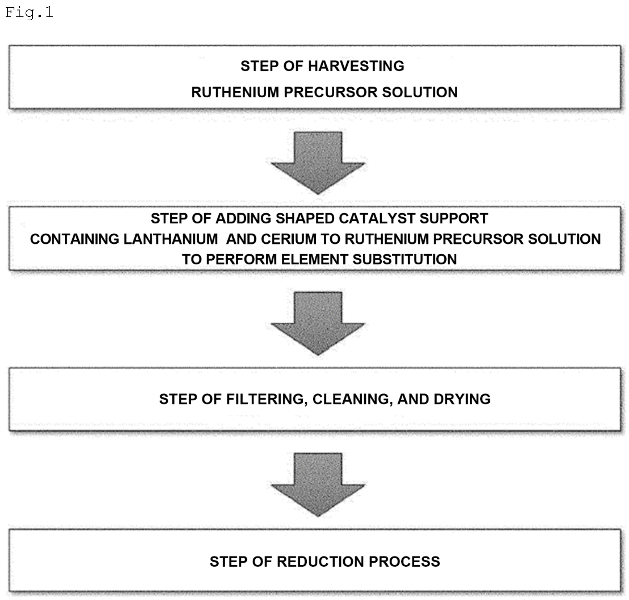

FIG. 1 is a schematic process diagram illustrating the method of preparing the catalyst for the ammonia decomposition reaction, according to one embodiment of the present disclosure.

Referring to FIG. 1, the method of preparing the catalyst for the ammonia decomposition reaction, according to one embodiment of the present disclosure, may include a step of supporting ruthenium on a support by: first obtaining an active metal precursor solution in which a ruthenium precursor is dissolved as an active metal precursor, adding a lanthanum-cerium composite oxide support thereto, and reacting ruthenium with lanthanum and/or cerium of the lanthanum-cerium composite oxide support by an element substitution reaction.

In this case, one or more selected from the group consisting of organic and inorganic compounds containing ruthenium ions are usable as the ruthenium precursor, which may specifically be a chloride, hydrate, nitride, acetylacetonate, iodide, or the like of ruthenium and is preferably a ruthenium chloride, such as RuCl₃ · xH₂O and [Ru(NH₃)₆]Cl₃.

To be uniformly dispersed and supported on the lanthanum-cerium composite oxide support to be described later, the ruthenium precursor, serving as the active metal precursor, may be added to a solvent and used.

As the solvent to which the ruthenium precursor is added, any solvents capable of dissolving the ruthenium precursor are usable without limitations. Examples of the solvent may include water, alcohols such as methanol and ethanol, ketones such as acetone, and the like. In terms of the content of the solvent, any contents capable of dissolving the ruthenium precursor are usable also without limitations.

The element substitution reaction, according to the present disclosure, may be characterized in that after adding the lanthanum-cerium composite oxide support containing lanthanum and cerium to the active metal precursor solution, the resulting product is maintained so that element substitution can occur, thus substituting the active metal of the active metal precursor solution by the element substitution reaction with the element included in the lanthanum-cerium composite oxide support to support the active metal on the lanthanum-cerium composite oxide support.

The element substitution reaction can support the active metal on the surface of the support through the supporting process of the active metal without involving the use of a separate reducing agent, after adding the lanthanum-cerium composite oxide support to the active metal precursor solution, as the active metal of the active metal precursor solution is substituted by the element substitution reaction with lanthanum and/or cerium contained in the support.

Unlike methods including wet impregnation, dip coating, spraying, and the like, the above element substitution method does not artificially remove the solvent through a rotary evaporator, an evaporator, or a drier and can support the active metal element through element-by-element substitution where the element in the support is substituted under specific reaction conditions. For this reason, this may be a further suitable method for supporting the active metal, especially on supports having limited surface areas, such as shaped pellets.

In this case, the element substitution reaction may be performed in a temperature range of room temperature to 90°C, preferably in the range of 50°C to 90°C, and more preferably in the range of 50°C to 80°C in terms of the supporting efficiency. The substitution time may vary depending on circumstances, but the element substitution reaction may, for example, be performed for 30 minutes to 24 hours, preferably for 1 hour to 18 hours, and more preferably for 3 hours to 15 hours. When the element substitution reaction temperature is the same as or higher than room temperature, the reaction rate of the element substitution reaction may be facilitated, thus shortening the element substitution time. In the case where water is used as the solvent, the loss of the solvent, caused by vaporization, may be prevented when the element substitution reaction is performed at a temperature of lower than 90°C.

Next, the supported product in which the active metal is supported on the lanthanum-cerium composite oxide support described above is subjected to filtration, cleaning, and then drying.

The filtration, cleaning, and drying may be sufficiently performed using methods and devices known in the art to which the present disclosure pertains. The cleaning is to clean the active metal precursor that has not been substituted for the lanthanum and/or cerium in the support by the element substitution and is physically on the surface of the support, inert materials, or the like. Any cleaning solvents are usable without limitations as long as the activity is not affected, but the cleaning may be performed mostly using water, alcohol, or the like. In this case, the drying may be controlled in a temperature range of 80°C to 150°C, preferably in the range of 90°C to 110°C, using a vacuum oven, hot air, constant temperature and humidity, a microwave, and the like. These drying conditions should be understood as illustrative.

The supported product dried above may be subjected to treatment in a reducing atmosphere to prepare the catalyst for the ammonia decomposition reaction.

The treatment in a reducing atmosphere is not limited as long as active metals, such as ruthenium contained in the supported product, can be reduced. Examples thereof may involve: methods using reducing gases such as carbon monoxide, hydrocarbon, and hydrogen; methods of adding reducing agents such as hydrazine, lithium aluminum hydride, and tetramethyl borohydride; and the like. In addition, when using reducing gases, the reducing gas used may be diluted with other gases (for example, nitrogen and carbon dioxide). Of these methods, reduction treatment using hydrogen as the reducing gas is preferable.

When using the reducing gas, heating is preferably performed in a temperature range of 300°C to 800°C, more preferably in the range of 400°C to 600°C, and the reduction treatment time is preferably 0.5 hours to 5 hours and more preferably 1 hour to 3 hours. Furthermore, before the reduction treatment using the reducing gas, an inert gas such as nitrogen or carbon dioxide may be used. Preferably, pre-calcination is performed in a temperature range of 200°C to 400°C for 1 hour to 7 hours.

When the reduction treatment described above is performed, the active metal compound, in principle, is converted to a metal in the zero-valent metallic state. When the reduction treatment is poorly performed, the active metal compound is only partially reduced, so the catalyst exhibits low activity. However, even in this case, on the basis of the fact that hydrogen is generated during the ammonia decomposition reaction, the reduction treatment is performed on the poorly reduced part by continuing such a reaction to create the same environment as the condition where the reduction treatment is performed. As a result, the zero-valent metallic state is formed, thus enabling the catalyst to exhibit high activity.

In the catalyst for the ammonia decomposition reaction, 0.1 wt% to 10 wt% of ruthenium, serving as the active metal, may be supported with respect to the total weight of the catalyst for the ammonia decomposition reaction. In terms of the catalyst for the ammonia decomposition reaction, when the content of ruthenium, with respect to the total weight of the catalyst, falls within the above range, the active metal can be sufficiently and economically supported for the activity of ruthenium, thereby further improving the activity of the catalyst for the ammonia decomposition reaction.

In one embodiment of the present disclosure, a calcination step may further be added after the drying described above, or the reduction may be performed after performing the calcination step immediately instead of the drying. Alternatively, the reduction may be immediately performed while the drying step may be omitted.

In the meantime, as the lanthanum-cerium composite oxide support, any supports containing predetermined contents of lanthanum and cerium are usable without limitations. Hence, the lanthanum-cerium composite oxide support may involve the use of currently available products or may be prepared for use. In addition, as the method of preparing the lanthanum-cerium composite oxide support, any preparation methods known in the art to which the present disclosure pertains are applicable without limitations.

For example, the lanthanum-cerium composite oxide support may be prepared by a method including the following steps: (i) obtaining a mixture of lanthanum and cerium by adding a lanthanum precursor and a cerium precursor to a solvent; (ii) producing a precipitate by adding a basic substance to the obtained mixture of lanthanum and cerium; (iii) subjecting the resulting precipitate to filtration, cleaning, and then drying; (iv) obtaining a lanthanum and cerium composite oxide solid solution by subjecting the dried precipitate to calcination; and (v) obtaining a shaped catalyst support containing lanthanum and cerium by shaping the obtained lanthanum and cerium composite oxide solid solution and then subjecting the shaped lanthanum and cerium composite oxide solid solution to calcination.

For a detailed description, the lanthanum precursor and the cerium precursor are first added to the solvent, mixed, and stirred, thereby obtaining the mixture of the lanthanum and cerium precursors [Step (i)].

As the lanthanum or cerium precursor, one or more selected from the group consisting of organic and inorganic compounds containing lanthanum or cerium ions are usable. Specifically, one or more of an oxide, a chloride, a hydroxide, a bromide, an iodide, a nitrate, a sulfate, a carbonate, an acetate, an oxalate, a fluoride, an isopropoxide, and an organometallic complex thereof are usable.

The basic substance is added to the mixture of lanthanum and cerium obtained as described above, thereby producing the precipitate [Step (ii)].

In this case, as the basic substance, any components capable of precipitating lanthanum and cerium are usable without limitations, and one or more selected from ammonia, sodium hydroxide, potassium hydroxide, hydrazine, sodium carbonate, and the like are usable without limitations.

Subsequently, the resulting precipitate is subjected to filtration and cleaning, then placed in a vacuum oven or the like, and dried [Step (iii)]. Next, the dried precipitate is subjected to calcination, thereby obtaining the lanthanum-cerium composite oxide solid solution [Step (iv)].

The drying in Step (iii) may be performed in a temperature range of 90°C to 110°C. In addition, to obtain the lanthanum-cerium composite oxide solid solution, the calcination in Step (iv) may be performed in an air atmosphere in a temperature range of 400°C to 700°C, preferably in the range of 500°C to 550°C, for 1 hour to 10 hours, preferably for 3 hours to 5 hours.

The calcination in the present disclosure may be performed in various types of known furnaces, such as tube furnaces, convection furnaces, and grate furnaces, but there are no particular limitations.

In the case of shaped products, the use of methods of precipitating metals using reducing agents is undesirable because particles become separately present. In addition, supporting methods by artificially removing solvents through wet impregnation, spraying, driers, and evaporators such as rotary evaporators are inefficient in terms of energy consumption. Furthermore, dip coating and the like have problems in that there is no choice but to repeat the supporting processes to support the desired content. Moreover, for control over inert materials in a precursor, an additional process is required separately after preparing a catalyst. However, supporting ruthenium by the element substitution method of the present disclosure involves element-by-element substitution and exchange. For this reason, ruthenium can be supported on a limited surface area without involving a separate reducing agent, and the process can be simplified. As a result, the method of preparing the catalyst, according to the present disclosure, is particularly preferable in terms of catalyst systems in which an active metal is supported on a shaped support.

To obtain such a shaped support, the obtained lanthanum and cerium composite oxide solid solution may be shaped through various shaping methods, such as injection molding, extrusion molding, vacuum molding, and casting molding, and then subjected to calcination, thereby obtaining the lanthanum-cerium composite oxide support [Step (v)].

When shaping the lanthanum and cerium composite oxide solid solution, predetermined contents of an inorganic binder, an organic binder, a solvent, and the like may be mixed in the lanthanum and cerium composite oxide solid solution to prepare the catalyst mixture, and the shaping may then be performed.

As the inorganic binder, the organic binder, and the solvent, any of those used in the art to which the present disclosure pertains are usable without limitations, meaning that there are no particular limitations. The inorganic binder may, for example, be silica sol, alumina sol, titania sol, waterglass, boehmite, or the like, the organic binder may, for example, be cellulose, polyvinylalcohol, polyethylene glycol, tylose, starch, or the like, and the solvent may, for example, be water, alcohols such as methanol and ethanol, ketones such as acetone, or the like.

The calcination in Step (v) may be performed in an oxidizing, reducing, or inert atmosphere in a temperature range of 400°C to 700°C, preferably in the range of 500°C to 550°C, for 1 hour to 10 hours, preferably for 3 hours to 5 hours so that the binders, the solvent, and the like are removed while preventing changes in the crystal structure of the catalyst support.

In the lanthanum-cerium composite oxide support prepared in this manner, a mole ratio of lanthanum to cerium is in the range of 0.1:0.9 to 0.5:0.5. When the mole ratio of lanthanum to cerium falls within the above range, each element of the lanthanum and cerium composite oxides is formed to be dispersed from one another, making electron transfer characteristics the best in the corresponding composition during the element substitution reaction of ruthenium. Accordingly, the catalyst in which a high content of ruthenium is supported on the support while allowing high-activity ammonia decomposition ability to be obtained can be prepared.

The method of preparing the catalyst for ammonia decomposition, according to the present disclosure, may involve further supporting a co-catalyst by adding a co-catalyst precursor.

In this case, the co-catalyst may be composed of cesium. This cesium provides electrons to the active material of the catalyst, such as ruthenium, in the ammonia decomposition reaction to increase the electron density, thereby allowing the dissociatively adsorbed nitrogen to be well-desorbed as nitrogen molecules, which is the key step in the ammonia decomposition reaction, and thus may act to increase the efficiency of the ammonia decomposition reaction.

When adding cesium as the co-catalyst in addition to the ruthenium serving as the active material of the catalyst, the supporting of the cesium may be performed simultaneously with the supporting of ruthenium by element substitution or may be performed before/after the supporting of ruthenium.

The cesium is supported preferably by methods other than element substitution, more preferably by impregnation, and even more preferably by impregnation after the supporting of ruthenium. When supporting cesium by element substitution, a cesium precursor is allowed to be included in the active metal precursor solution, in addition to the ruthenium precursor serving as the active metal precursor, thereby supporting cesium on the support in conjunction with ruthenium.

In this case, a solvent for dissolving the active metal precursor must be able to simultaneously dissolve both the ruthenium precursor and the cesium precursor, and water, alcohols such as methanol and ethanol, ketones such as acetone, and the like, as described above, are usable as the solvent.

One or more selected from the group consisting of organic and inorganic compounds containing cesium ions are usable as the cesium precursor, which may specifically be a chloride, hydrate, nitride, acetylacetonate, iodide, or the like of cesium and is preferably a cesium nitride, such as CsNO₃.

This cesium may be supported separately before or after the supporting of ruthenium by element substitution. Preferably, the cesium is supported after the supporting of ruthenium. When the cesium is supported on the lanthanum-cerium composite oxide support on which ruthenium is supported, as described above, one or more steps of drying, calcination, and reduction may be further performed, after the ruthenium supporting step, on the lanthanum-cerium composite oxide support on which ruthenium is supported. Therefore, the solution occupying the pores of the support may be removed before supporting the cesium.

The cesium may be supported through common supporting methods but is preferably supported through impregnation.

The cesium constituting the co-catalyst may have a content that is determined considering the content of the active material of the catalyst. With respect to the total weight of the catalyst, the content thereof used is preferably in the range of 0.01 wt% to 10 wt% and is more preferably in the range of 0.5 wt% to 5 wt%.

In another aspect, the present disclosure relates to a catalyst for an ammonia decomposition reaction, which is characterized by being prepared by the above method of preparing the catalyst for the ammonia decomposition and including ruthenium supported on a lanthanum-cerium composite oxide support, and to a method of producing hydrogen from ammonia using the catalyst for the ammonia decomposition reaction.

The catalyst for the ammonia decomposition reaction, prepared by the preparation method of the present disclosure, can exhibit improved catalytic activity, thermal stability, and durability due to the increased dispersion degree of the active metal for ammonia decomposition and the strong interaction effect between the active metal for ammonia decomposition and the metal oxide of the catalyst support, thus improving an ammonia conversion rate in the ammonia decomposition reaction.

In addition, the method of producing hydrogen, according to the present disclosure, can produce hydrogen by subjecting ammonia-containing gas to treatment using the above catalyst for the ammonia decomposition reaction and decomposing the resulting ammonia into nitrogen and hydrogen by dehydrogenation.

Hereinafter, the present disclosure will be described in more detail through the following specific examples. The following examples are only to help the understanding of the present disclosure, and the scope of the present disclosure is not limited thereto.

### <Example 1>

### 1-1: Preparation of lanthanum-cerium composite oxide support

A homogeneous aqueous solution was formulated by adding 75.7 g of a cerium nitrate hydrate and 37.7 g of a lanthanum nitrate hydrate to 1 L of distilled water, followed by mixing and stirring. Then, 1 mole of an ammonia solution was added dropwise to the resulting aqueous solution until the pH reached 11 to produce a precipitate. This precipitate was subjected to filtration and cleaning, placed in a vacuum oven, and dried at a temperature of 110°C for 12 hours. The resulting dried precipitate was ground, placed in a calciner, and subjected to treatment at a temperature of 500°C for 3 hours in an air atmosphere, thereby obtaining La_{0.33}Ce_{0.67}O_{1.84}, a lanthanum and cerium composite oxide solid solution. After mixing 20 g of the lanthanum and cerium composite oxide solid solution, obtained in such a manner, with 1 g of an organic binder and 12 g of water, the resulting mixture was shaped into a pellet form having a diameter of 2 mm and a length of 3 mm, using an injection molding machine. The shaped pellet was subjected to calcination in a calciner at a temperature of 500°C for 3 hours to obtain a lanthanum-cerium composite oxide support.

### 1-2: Preparation of catalyst for ammonia decomposition reaction

After adding 0.936 g of a ruthenium chloride hydrate and 0.89 g of a cesium nitrate hydrate to 15 ml of distilled water, 12 g of the lanthanum-cerium composite oxide support obtained in Example 1-1 was added. The resulting adduct was maintained at a temperature of 80°C for 6 hours to support ruthenium on the lanthanum-cerium composite oxide support by an element substitution reaction of ruthenium of the ruthenium chloride hydrate with the lanthanum and/or cerium of the lanthanum-cerium composite oxide. The resulting supported product was subjected to filtration and cleaning, placed in a vacuum oven, and dried at a temperature of 110°C for 12 hours. The resulting dried precipitate was subjected to treatment for 3 hours at a temperature of 500°C in a 100% hydrogen atmosphere, thereby preparing a catalyst (Ru-Cs/La_{0.33}Ce_{0.67}O_{1.84}) for an ammonia decomposition reaction, in which 2.91 wt% of ruthenium was supported.

### <Example 2>

A catalyst (Ru-Cs/La_{0.33}Ce_{0.67}O_{1.84}) for an ammonia decomposition reaction, in which 3.34 wt% of ruthenium was supported, was prepared in the same manner as in Example 1, except that after adding 1.82 g of the ruthenium chloride hydrate and 1.72 g of the cesium nitrate hydrate to 25 ml of distilled water, 12 g of the lanthanum-cerium composite oxide support obtained in Example 1-1 was added.

### <Example 3>

A catalyst (Ru-Cs/La_{0.33}Ce_{0.67}O_{1.84}) for an ammonia decomposition reaction, in which 0.68 wt% of ruthenium was supported, was prepared in the same manner as in Example 1, except that after adding 0.52 g of the ruthenium chloride hydrate and 0.49 g of the cesium nitrate hydrate to 25 ml of distilled water, 12 g of the lanthanum-cerium composite oxide support obtained in Example 1-1 was added.

### <Example 4>

A catalyst (Ru-Cs/La_{0.33}Ce_{0.67}O_{1.84}) for an ammonia decomposition reaction, in which 1.07 wt% of ruthenium was supported, was prepared in the same manner as in Example 1, except that after adding 1.04 g of the ruthenium chloride hydrate and 0.98 g of the cesium nitrate hydrate to 25 ml of distilled water, 12 g of the lanthanum-cerium composite oxide support obtained in Example 1-1 was added.

### <Example 5>

A catalyst (Ru-Cs/La_{0.33}Ce_{0.67}O_{1.84}) for an ammonia decomposition reaction, in which 1.79 wt% of ruthenium was supported, was prepared in the same manner as in Example 2, except that the element substitution reaction was performed at a temperature of 25°C for 24 hours.

### <Example 6>

A catalyst (Ru-Cs/La_{0.33}Ce_{0.67}O_{1.84}) for an ammonia decomposition reaction, in which 3.06 wt% of ruthenium was supported, was prepared in the same manner as in Example 2, except that the element substitution reaction was performed at a temperature of 50°C for 24 hours.

### <Example 7>

A catalyst (Ru-Cs/La_{0.33}Ce_{0.67}O_{1.84}) for an ammonia decomposition reaction, in which 3.34 wt% of ruthenium was supported, was prepared in the same manner as in Example 2, except that the element substitution reaction was performed at a temperature of 80°C for 24 hours.

### <Example 8>

A catalyst (Ru-Cs/La_{0.33}Ce_{0.67}O_{1.84}) for an ammonia decomposition reaction, in which 3.39 wt% of ruthenium was supported, was prepared in the same manner as in Example 1, except that the element substitution reaction was performed at a temperature of 90°C for 6 hours.

### <Example 9>

A catalyst (Ru-Cs/La_{0.33}Ce_{0.67}O_{1.84}) for an ammonia decomposition reaction, in which 1.92 wt% of ruthenium was supported, was prepared in the same manner as in Example 2, except that the element substitution reaction was performed at a temperature of 80°C for 1 hour.

### <Example 10>

A catalyst (Ru-Cs/La_{0.33}Ce_{0.67}O_{1.84}) for an ammonia decomposition reaction, in which 2.82 wt% of ruthenium was supported, was prepared in the same manner as in Example 2, except that the element substitution reaction was performed at a temperature of 80°C for 3 hours.

### <Example 11>

A catalyst (Ru-Cs/La_{0.33}Ce_{0.67}O_{1.84}) for an ammonia decomposition reaction, in which 3.62 wt% of ruthenium was supported, was prepared in the same manner as in Example 2, except that the element substitution reaction was performed at a temperature of 80°C for 12 hours.

### <Example 12>

A catalyst (Ru/La_{0.33}Ce_{0.67}O_{1.84}) for an ammonia decomposition reaction, in which 2.84 wt% of ruthenium was supported, was prepared in the same manner as in Example 1, except that cesium was not added.

### <Example 13>

### 13-1: Supporting of ruthenium

After adding 0.936 g of a ruthenium chloride hydrate to 15 ml of distilled water, 12 g of the lanthanum-cerium composite oxide support obtained in Example 1-1 was added. The resulting adduct was maintained at a temperature of 80°C for 6 hours to support ruthenium on the lanthanum-cerium composite oxide support by an element substitution reaction of ruthenium of the ruthenium chloride hydrate with the lanthanum and/or cerium of the lanthanum-cerium composite oxide. The resulting supported product was subjected to filtration and cleaning, placed in a vacuum oven, and dried at a temperature of 110°C for 12 hours.

### 13-2: Supporting of cesium

A cesium nitrate aqueous solution was prepared by adding 0.35 g of a cesium nitrate hydrate to 15 ml of distilled water and then stirred with the dried lanthanum-cerium composite oxide support on which ruthenium chloride was supported, obtained in Example 13-1. Cesium ions were supported on the surface of the catalyst by rotating the resulting stirred solution at a temperature of 50°C, a pressure of 72 mbar, and a rotation speed of 150 rpm using a rotary evaporator while artificially evaporating moisture, which was then placed in a vacuum oven and dried at a temperature of 110°C for 12 hours. The resulting dried precipitate was subjected to treatment for 3 hours at a temperature of 500°C in a 100% hydrogen atmosphere, thereby preparing a catalyst (Cs/Ru/La_{0.33}C_{80.67}O_{1.84}) for an ammonia decomposition reaction.

### <Example 14>

A catalyst for an ammonia decomposition reaction was prepared in the same manner as in Example 13, except that 0.175 g of the cesium nitrate hydrate was used.

### <Example 15>

A catalyst for an ammonia decomposition reaction was prepared in the same manner as in Example 13, except that 0.525 g of the cesium nitrate hydrate was used.

### <Example 16>

A catalyst for an ammonia decomposition reaction was prepared in the same manner as in Example 13, except that 0.7 g of the cesium nitrate hydrate was used.

### <Example 17>

A catalyst for an ammonia decomposition reaction was prepared in the same manner as in Example 1, except that 0.35 g of the cesium nitrate hydrate was added.

### <Example 18>

A catalyst (Ru/Cs/La_{0.33}Ce_{0.67}O_{1.84}) for an ammonia decomposition reaction was prepared in the same manner as in Example 13, except that cesium was first supported through wet impregnation and dried, followed by the element substitution reaction of ruthenium using the obtained dried product.

### <Comparative Example 1>

A ruthenium precursor aqueous solution was prepared by adding 0.936 g of a ruthenium chloride hydrate and 0.89 g of a cesium nitrate hydrate to 15 ml of distilled water. After coating 12 g of the lanthanum-cerium composite oxide support obtained in Example 1-1 with the ruthenium precursor aqueous solution by spray coating, the resulting product was placed in a vacuum oven and dried at a temperature of 110°C for 12 hours. The resulting dried product was subjected to treatment for 3 hours at a temperature of 500°C in a 100% hydrogen atmosphere, thereby preparing a catalyst (Ru-Cs/La_{0.33}Ce_{0.67}O_{1.84}) for an ammonia decomposition reaction, in which 2.98 wt% of ruthenium was supported.

### <Comparative Example 2>

A ruthenium precursor aqueous solution was prepared by adding 0.936 g of a ruthenium chloride hydrate and 0.89 g of a cesium nitrate hydrate to 15 ml of distilled water, followed by adding 12 g of the lanthanum-cerium composite oxide support obtained in Example 1-1. Then, ruthenium ions were supported on the surface of the catalyst by rotating the resulting stirred solution at a temperature of 50°C, a pressure of 72 mbar, and a rotation speed of 150 rpm using a rotary evaporator while artificially evaporating moisture, which was then placed in a vacuum oven and dried at a temperature of 110°C for 12 hours. The resulting dried product was subjected to treatment for 3 hours at a temperature of 500°C in a 100% hydrogen atmosphere, thereby preparing a catalyst (Ru-Cs/La_{0.33}Ce_{0.67}O_{1.84}) for an ammonia decomposition reaction, in which 3.17 wt% of ruthenium was supported.

### <Comparative Example 3>

A ruthenium precursor aqueous solution was prepared by adding 0.936 g of a ruthenium chloride hydrate and 0.89 g of a cesium nitrate hydrate to 15 ml of distilled water, followed by adding 12 g of the lanthanum-cerium composite oxide support obtained in Example 1-1 to absorb and support the metal aqueous solution for 30 seconds. Then, the resulting product was dried in an oven at a temperature of 103°C for 1 hour, placed in a vacuum oven, and dried at a temperature of 110°C for 12 hours. The resulting dried product was subjected to treatment for 3 hours at a temperature of 500°C in a 100% hydrogen atmosphere, thereby preparing a catalyst (Ru-Cs/La_{0.33}Ce_{0.67}O_{1.84}) for an ammonia decomposition reaction, in which 2.32 wt% of ruthenium was supported.

### <Comparative Example 4>

A total of three cycles of processes in which the catalyst for the ammonia decomposition reaction, prepared in Comparative Example 3, was absorbed, supported, and dried in an oven at a temperature of 103°C for 1 hour were repeated for supporting, thereby preparing a catalyst (Ru-Cs/La_{0.33}Ce_{0.67}O_{1.84}) for an ammonia decomposition reaction, in which 3.61 wt% of ruthenium was supported.

### <Comparative Example 5>

A total of five cycles of processes in which the catalyst for the ammonia decomposition reaction, prepared in Comparative Example 3, was absorbed, supported, and dried in an oven at a temperature of 103°C for 1 hour were repeated for supporting, thereby preparing a catalyst (Ru-Cs/La_{0.33}Ce_{0.67}O_{1.84}) for an ammonia decomposition reaction, in which 4.65 wt% of ruthenium was supported.

### <Comparative Example 6>

A catalyst for an ammonia decomposition reaction was prepared in the same manner as in Example 1. However, in the preparation of the support in Example 1-1, only 113.2 g of the lanthanum nitrate hydrate, rather than the cerium nitrate hydrate and the lanthanum nitrate hydrate, was used and added to 1 L of distilled water, thereby preparing the catalyst (Ru-Cs/La₂O₃) for the ammonia decomposition reaction, in which 0.86 wt% of ruthenium was supported.

### <Comparative Example 7>

A catalyst for an ammonia decomposition reaction was prepared in the same manner as in Example 1. However, in the preparation of the support in Example 1-1, only 113.5 g of the cerium nitrate hydrate, rather than the cerium nitrate hydrate and the lanthanum nitrate hydrate, was used and added to 1 L of distilled water, thereby preparing the catalyst (Ru-Cs/CeO₂) for the ammonia decomposition reaction, in which 1.55 wt% of ruthenium was supported.

### <Comparative Example 8>

A catalyst (Ru/La_{0.33}C_{0.67}O_{1.84}) for an ammonia decomposition reaction, in which 3.05 wt% of ruthenium was supported, was prepared in the same manner as in Comparative Example 1, except that cesium was not added.

### <Comparative Example 9>

A catalyst (Ru/La_{0.33}Ce_{0.67}O_{1.84}) for an ammonia decomposition reaction, in which 3.45 wt% of ruthenium was supported, was prepared in the same manner as in Comparative Example 4, except that cesium was not added.

**[Table 1]**

| Classific ation | Catalyst | | Element substitution reaction | | | Rutheni um-support ing method | Ruthen ium conten t (wt%) |
|---|---|---|---|---|---|---|---|
| | Activ e metal | Support composi tion | Tempe ratur e (°C) | Tim e (hr ) | Rutheni um solutio n concent ration (M) | | |
| Example 1 | Ru-Cs | La_{0.33}Ce _{0.67}O_{1.84} | 80 | 6 | 0.3 | Element substit ution | 2.91 |
| Example 2 | Ru-Cs | La_{0.33}Ce _{0.67}O_{1.84} | 80 | 6 | 0.35 | Element substit ution | 3.34 |
| Example 3 | Ru-Cs | La_{0.33}Ce _{0.67}O_{1.84} | 80 | 6 | 0.1 | Element substit ution | 0.68 |
| Example 4 | Ru-Cs | La_{0.33}Ce _{0.67}O_{1.84} | 80 | 6 | 0.2 | Element substit ution | 1.07 |
| Example 5 | Ru-Cs | La_{0.33}Ce _{0.67}O_{1.84} | 25 | 24 | 0.35 | Element substit ution | 1.79 |
| Example 6 | Ru-Cs | La_{0.33}Ce _{0.67}O_{1.84} | 50 | 24 | 0.35 | Element substit ution | 3.06 |
| Example 7 | Ru-Cs | La_{0.33}Ce _{0.67}O_{1.84} | 80 | 24 | 0.35 | Element substit ution | 3.59 |
| Example 8 | Ru-Cs | La_{0.33}Ce _{0.67}O_{1.84} | 90 | 6 | 0.3 | Element substit ution | 3.39 |
| Example 9 | Ru-Cs | La_{0.33}Ce _{0.67}O_{1.84} | 80 | 1 | 0.35 | Element substit ution | 1.92 |
| Example 10 | Ru-Cs | La_{0.33}Ce _{0.67}O_{1.84} | 80 | 3 | 0.35 | Element substit ution | 2.82 |
| Example 11 | Ru-Cs | La_{0.33}Ce _{0.67}O_{1.84} | 80 | 12 | 0.35 | Element substit ution | 3.62 |
| Example 12 | Ru | La_{0.33}Ce _{0.67}O_{1.84} | 80 | 6 | 0.3 | Element substit ution | 2.84 |
| Comparati ve Example 1 | Ru-Cs | La_{0.33}Ce _{0.67}O_{1.84} | - | - | 0.3 | Sprayin g | 2.98 |
| Comparati ve Example 2 | Ru-Cs | La_{0.33}Ce _{0.67}O_{1.84} | - | - | 0.3 | Wet impregnation | 3.17 |
| Comparati ve Example 3 | Ru-Cs | La_{0.33}Ce _{0.67}O_{1.84} | - | - | 0.3 | 1 cycle of dip coating | 2.32 |
| Comparati ve Example 4 | Ru-Cs | La_{0.33}Ce _{0.67}O_{1.84} | - | - | 0.3 | 3 cycles of dip coating | 3.61 |
| Comparati ve Example 5 | Ru-Cs | La_{0.33}Ce _{0.67}O_{1.84} | - | - | 0.3 | 5 cycles of dip coating | 4.65 |
| Comparati ve Example 6 | Ru-Cs | La₂O₃ | 80 | 6 | 0.3 | Element substit ution | 0.86 |
| Comparati ve Example 7 | Ru-Cs | CeO₂ | 80 | 6 | 0.3 | Element substit ution | 1.55 |
| Comparati ve Example 8 | Ru | La_{0.33}Ce _{0.67}O_{1.84} | - | - | 0.3 | Sprayin g | 3.05 |
| Comparati ve Example 9 | Ru | La_{0.33}Ce _{0.67}O_{1.84} | - | - | 0.3 | 3 cycles of dip coating | 3.45 |

**[Table 2]**

| Classif ication | Catalyst | | Cesium content support ed | Ruthenium-supporting method | Cesium-supporting method |
|---|---|---|---|---|---|
| | Active metal | Support compositio n | | | |
| Example 13 | Cs/Ru | La_{0.33}Ce_{0.67}O_{1.84} | 2 | Element substitutio n | Wet impregnati on |
| Example 14 | Cs/Ru | La_{0.33}Ce_{0.67}O_{1 .84} | 1 | Element substitutio n | Wet impregnati on |
| Example 15 | Cs/Ru | La_{0.33}Ce_{0.67}O_{1 .84} | 3 | Element substitutio n | Wet impregnati on |
| Example 16 | Cs/Ru | La_{0.33}Ce_{0.67}O_{1 .84} | 4 | Element substitutio n | Wet impregnati on |
| Example 17 | Ru-Cs | La_{0.33}Ce_{0.67}O_{1 .84} | 2 | Element substitutio n | Element substituti on |
| Example 18 | Ru/Cs | La_{0.33}Ce_{0.67}O_{1 .84} | 2 | Element substitutio n | Wet impregnati on |

### <Experimental Example 1: Catalyst characterization>

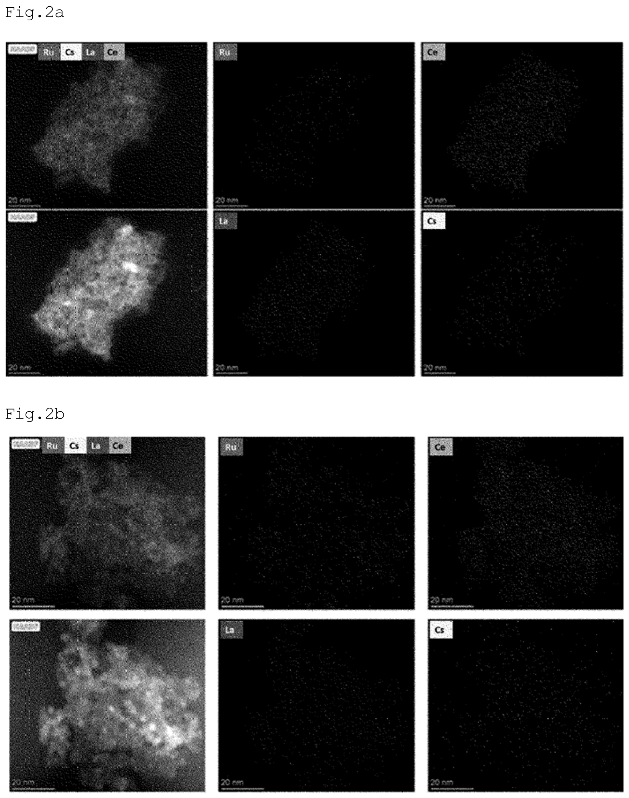

STEM-EDS analysis of the catalyst prepared in Example 1 was performed to observe the microstructure of the catalyst prepared in the example. The results thereof are shown in FIG. 2.

As shown in FIG. 2a, the surface of the dried catalyst prepared by Example 1, obtained before the reduction process, confirmed that ruthenium is located within the lattices of lanthanum and ceria as a result of the element substitution for lanthanum and ceria and thus is evenly dispersed.

In addition, as shown in FIG. 2b, the catalyst prepared in Example 1 is subjected to heat treatment through the reduction process. Accordingly, ruthenium moves onto the surface, thus forming particles, and those, the sizes of which are 3 nm or smaller, appear to be dispersed evenly on the surface of the catalyst. As a result, ruthenium, serving as the active metal, was confirmed to be supported uniformly on the surface of the catalyst by the element substitution reaction.

### <Experimental Example 2: Catalytic activity measurement depending on ruthenium-supporting methods>

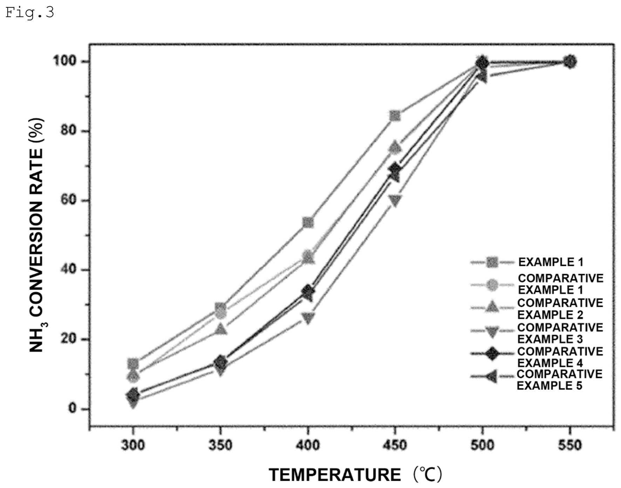

The ammonia decomposition reactions were each independently performed using the catalysts prepared in Example 1 and Comparative Examples 1 to 5, thereby measuring ammonia conversion rates. The measurement determined the ammonia decomposition ability under the following conditions: atmospheric pressure, an ammonia space velocity of 3,000 ml/g_{cat.}/h, and reaction temperatures of 300°C, 350°C, 400°C, 450°C, 500°C, and 550°C. The results thereof are shown in FIG. 3.

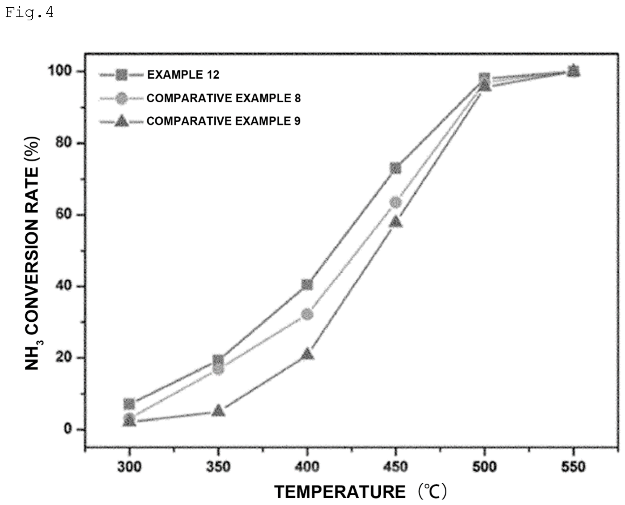

In addition, to compare the catalytic activity in terms of the ruthenium-supporting method in the case of not adding cesium as a co-catalyst, the ammonia decomposition reactions of the catalysts prepared by element substitution, spraying, and dip coating of Ru, prepared in Example 12, Comparative Example 8, and Comparative Example 9, respectively, were performed as described above. The results thereof are shown in FIG. 4.

As shown in FIGS. 3 and 4, it is confirmed that each of the catalysts of Examples 1 and 12, in which ruthenium is supported by element substitution, exhibits much better ammonia decomposition activity in the low-temperature range of 450°C or lower, than the catalysts prepared by other supporting methods.

This is presumed to be because, as the higher content is supported in the case of the supporting methods such as wet impregnation, spraying, and dip coating than in the case of the element substitution according to the present disclosure, the existing active metals are more likely to cluster with each other, resulting in lower interaction effect between the active metal and the support.

### <Experimental Example 3: Catalytic activity measurement and ruthenium amount supported depending on supports>

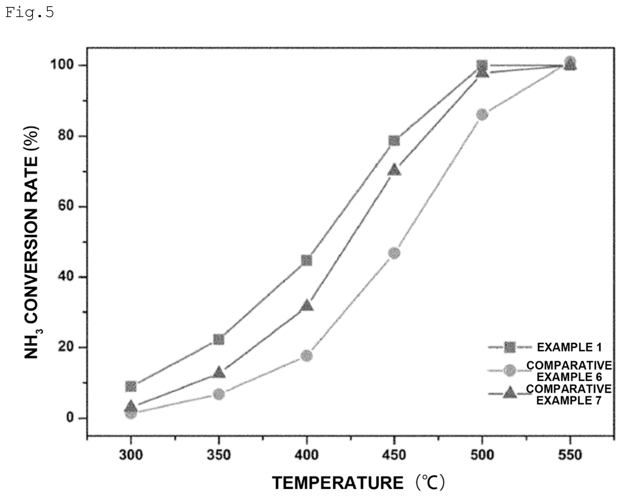

The ammonia decomposition reactions were each independently performed using the catalysts prepared in Example 1 and Comparative Examples 6 to 7, thereby measuring ammonia conversion rates. The measurement determined the ammonia decomposition ability under the following conditions: atmospheric pressure, an ammonia space velocity of 3,000 ml/g_{cat.}/h, and reaction temperatures of 300°C, 350°C, 400°C, 450°C, 500°C, and 550°C. The results thereof are shown in FIG. 5.

As shown in FIG. 5, the catalyst prepared in Example 1 exhibited excellent ammonia decomposition ability in the entire temperature range compared to those prepared in Comparative Examples 6 and 7.

In addition, referring to Table 1, the amounts of ruthenium supported in Comparative Example 6, in which the support is made of lanthanum oxide only, Comparative Example 7, in which the support is made of cerium oxide only, and the case where the support is the lanthanum-cerium composite oxide show that much higher contents than the arithmetic average values of the amounts thereof supported under the same supporting conditions on each of the lanthanum oxide support and cerium oxide support are supported.

The above results are presumed to show that there may be separate synergistic element substitution mechanisms of ruthenium in the lanthanum-cerium composite oxide, rather than element substitution mechanisms of ruthenium in each of the lanthanum oxide and cerium oxide. In addition, such a difference in the amount of ruthenium supported may have affected the difference in ammonia decomposition ability between Example 1 and Comparative Examples 6 and 7.

### <Experimental Example 4: Catalytic activity measurement depending on ruthenium contents>

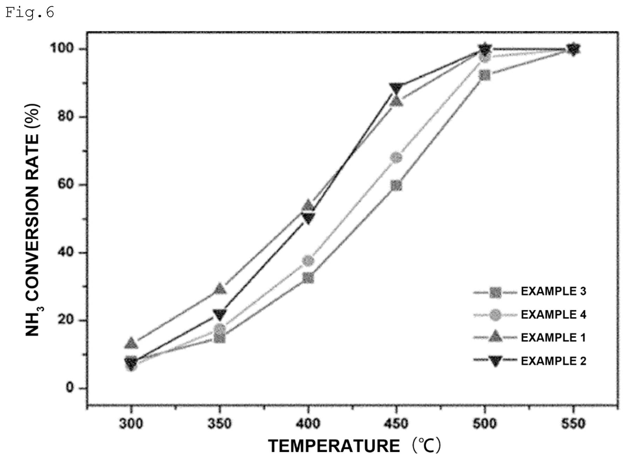

The ammonia decomposition reactions were each independently performed using the catalysts prepared in Examples 1 to 4, thereby measuring ammonia conversion rates. The measurement determined the ammonia decomposition ability under the following conditions: atmospheric pressure, an ammonia space velocity of 3,000 ml/g_{cat.}/h, and reaction temperatures of 300°C, 350°C, 400°C, 450°C, 500°C, and 550°C. The results thereof are shown in FIG. 6.

As shown in FIG. 6, it was also confirmed that the higher the content of ruthenium at temperatures of 450°C or higher, the better the ammonia decomposition ability.

### <Experimental Example 5: Catalytic activity measurement depending on element substitution reaction temperatures>

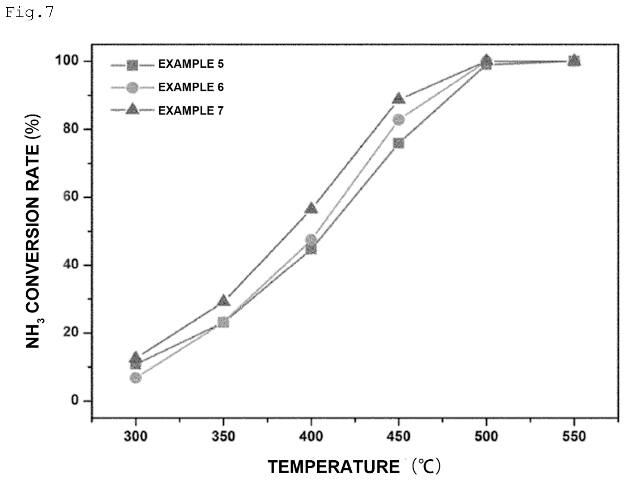

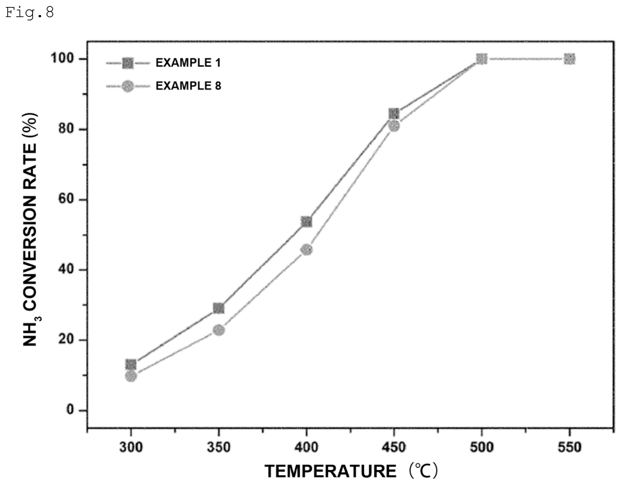

The ammonia decomposition reactions were each independently performed using the catalysts prepared in Examples 1 and 5 to 8, thereby measuring ammonia conversion rates. The measurement determined the ammonia decomposition ability under the following conditions: atmospheric pressure, an ammonia space velocity of 3,000 ml/g_{cat.}/h, and reaction temperatures of 300°C, 350°C, 400°C, 450°C, 500°C, and 550°C. The results thereof are shown in FIGS. 7 and 8.

As shown in FIG. 7, the catalysts prepared in Examples 6 to 7 exhibited better ammonia decomposition ability at temperatures of 350°C or higher than the catalyst prepared in Example 5.

As shown in FIG. 8, the catalyst prepared in Example 1 exhibited better ammonia decomposition ability than the catalyst prepared in Example 8.

### <Experimental Example 6: Residue measurement depending on element substitution reaction temperatures>

During the filtration and cleaning processes of the solution after the element substitution reaction of ruthenium in Example 1-2 in the preparation of the catalysts of Examples 5 to 7, the post-filtration solution and the post-cleaning solution were collected and subjected to measurement using inductively coupled plasma (ICP). The results thereof are shown in Table 3.

**[Table 3]**

| Classifi cation | Element substitution conditions | | Ru (mg/L) | La (mg/L) | Ce (mg/L) |
|---|---|---|---|---|---|
| | Temperature (°C) | Time (hr) | | | |
| Example 5 | 25 | 24 | 1,383 | 3,678 | 751 |
| Example 6 | 50 | 24 | 8 | 3,750 | 1,168 |
| Example 7 | 80 | 24 | 0.29 | 7,781 | 448 |

As shown in Table 3, the higher the temperature at which ruthenium was supported, the lower the amount of ruthenium residues in the solution, but the higher the amounts of lanthanum and cerium. This means that ruthenium is substituted for lanthanum and cerium due to the difference in reduction potential levels, so ruthenium is supported on the catalyst while lanthanum and cerium to be substituted are ionized again. In addition, it was seen that with the increased temperature, a large amount of ruthenium could be supported on the surface of the catalyst by the element substitution reaction.

### <Experimental Example 7: Catalytic activity measurement depending on element substitution reaction times>

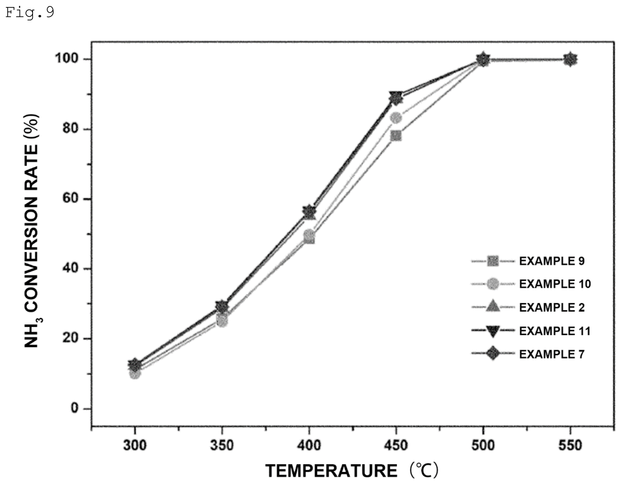

The ammonia decomposition reactions were each independently performed using the catalysts prepared in Examples 2, 7, and 9 to 11, thereby measuring ammonia conversion rates. The measurement determined the ammonia decomposition ability under the following conditions: atmospheric pressure, an ammonia space velocity of 3,000 ml/gcat./h, and reaction temperatures of 300°C, 350°C, 400°C, 450°C, 500°C, and 550°C. The results thereof are shown in FIG. 9.

As shown in FIG. 9, the catalysts prepared in Examples 2, 7, and 9 to 11 exhibited high ammonia decomposition ability. In particular, the catalysts prepared in Examples 2, 7, and 11 exhibited excellent ammonia decomposition ability in the entire temperature range.

### <Experimental Example 8: Catalytic activity measurement depending on cesium addition methods and amounts supported>

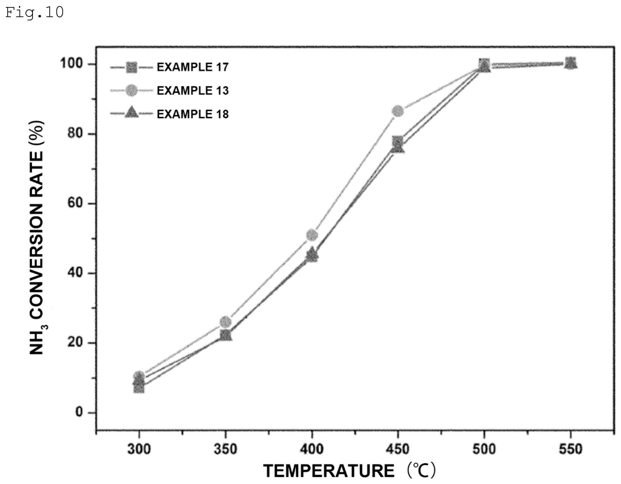

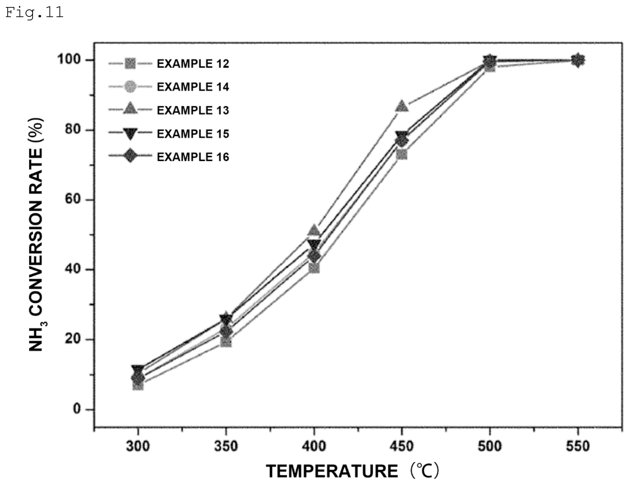

The ammonia decomposition reactions were each independently performed using the catalysts prepared in Examples 1 and 13 to 18, thereby measuring ammonia conversion rates. The measurement determined the ammonia decomposition ability under the following conditions: atmospheric pressure, an ammonia space velocity of 3,000 ml/gcat./h, and reaction temperatures of 300°C, 350°C, 400°C, 450°C, 500°C, and 550°C. The results thereof are shown in FIGS. 10 and 11.

Referring to FIG. 10, the catalyst in which Ru was supported by element substitution, followed by supporting Cs, as in Example 13, exhibited better ammonia decomposition ability than the catalysts using the same amount of the cesium precursor but supporting both cesium and ruthenium by the element substitution reaction (Example 17) and supporting cesium first on the support, followed by supporting ruthenium by the element substitution reaction (Example 18).

Referring to FIG. 11, with varying ratios of ruthenium to cesium, the ammonia decomposition ability changes. In addition, the catalyst prepared according to Example 13, in which the weight ratio of cesium to the support was 2, exhibited the best ammonia decomposition ability.

Therefore, in the preparation of the catalyst for ammonia decomposition with ruthenium serving as the active metal, the method, according to the present disclosure, enables high activity per unit volume of the catalyst to be obtained by supporting a high content of ruthenium on the unit support, while enabling high catalytic activity to be obtained. In addition, the catalyst prepared thereby exhibits high ammonia decomposition ability compared to existing catalysts and thus can be used effectively in the industry.

Although the present disclosure has been described with reference to the above embodiments, other embodiments may be constructed within the concept and scope of the present disclosure. Therefore, the scope of the present disclosure is defined by the appended claims and equivalents thereof and not limited by the specific embodiments described herein.

## Claims

1. A method of preparing a catalyst for an ammonia decomposition reaction, the method comprising:
supporting an active metal on a lanthanum-cerium composite oxide support by
adding the lanthanum-cerium composite oxide support to an active metal precursor solution in which a ruthenium precursor is dissolved as an active metal precursor, and
then reacting the active metal of the precursor solution with lanthanum and/or cerium of the lanthanum-cerium composite oxide support by an element substitution reaction.

2. The method of claim 1, wherein in the supporting of the active metal, the precursor solution comprises a cesium precursor in addition to the ruthenium precursor.

3. The method of claim 1, further comprising:
after the supporting of the active metal, subjecting the resulting active metal-supported product to filtration and then cleaning so that a physically absorbed active metal solution and an inert material are removed from the active metal precursor in the resulting supported product obtained by the filtration.

4. The method of claim 3, wherein the method comprises subjecting the cleaned supported product to reduction in a reducing atmosphere.

5. The method of claim 4, wherein the method comprises drying the reduced pre-cleaned supported product.

6. The method of claim 1, wherein in the supporting of the active metal, cesium is pre-supported on the lanthanum-cerium composite oxide support added to the precursor solution.

7. The method of claim 1, wherein the method comprises further supporting cesium after the supporting of the active metal.

8. The method of claim 7, wherein the supporting of cesium is performed by impregnation.

9. The method of claim 8, wherein before the supporting of cesium, one or more of drying, calcination, and reduction are performed on the lanthanum-cerium composite oxide support on which ruthenium is supported.

10. The method of any one of claims 1 to 9, wherein the shaped catalyst support containing lanthanum and cerium comprises:
(i) obtaining a mixture of lanthanum and cerium by adding a lanthanum precursor and a cerium precursor to a solvent;
(ii) producing a mixed precipitate of lanthanum and cerium in the obtained mixture;
(iii) subjecting the resulting precipitate to filtration and drying;
(iv) obtaining a lanthanum and cerium composite oxide solid solution by subjecting the dried precipitate to calcination; and
(v) obtaining the shaped catalyst support containing lanthanum and cerium by shaping the obtained lanthanum and cerium composite oxide solid solution and then subjecting the shaped lanthanum and cerium composite oxide solid solution to calcination.

11. The method of claim 10, wherein in the lanthanum-cerium composite oxide support, a mole ratio of lanthanum to cerium is in a range of 0.1:0.9 to 0.5:0.5.

12. The method of any one of claims 1 to 9, wherein the catalyst comprises 0.1 wt% to 10 wt% of ruthenium with respect to the total weight of the catalyst.

13. The method of any one of claims 1 to 9, wherein the catalyst comprises 0.01 wt% to 10 wt% of cesium with respect to the total weight of the catalyst.

14. A catalyst for an ammonia decomposition reaction, the catalyst being prepared by the method of any one of claims 1 to 9, whereby ruthenium serving as an active metal is supported on a lanthanum-cerium composite oxide support by element substitution.

15. A method of producing hydrogen from ammonia by an ammonia decomposition reaction in the presence of the catalyst of claim 14.

16. The method of claim 15, wherein the ammonia decomposition reaction is performed in a temperature range of 300°C to 550°C.
